# EUROPEAN PATENT APPLICATION

(11) **EP 2 062 638 A1**
(43) Date of publication of application: **27.05.2009**
(21) Application number: 08167643.9
(22) Date of filing: 27.10.2008
(51) Int. Cl.: B01D 53/32, B01D 53/92, B01D 53/94, F01N 3/08

(54) **Exhaust gas purification apparatus**

(30) Priority: 20.11.2007 JP 2007300626
(71) Applicant: KABUSHIKI KAISHA TOYOTA JIDOSHOKKI, Kariya-shi, Aichi 448-8671 (JP)
(72) Inventor: Koide, Naotaka, Kariya-shi Aichi 448-8671 (JP); Ikeda, Nami, Kariya-shi Aichi 448-8671 (JP); Kawauchi, Hiroyasu, Kariya-shi Aichi 448-8671 (JP); Kato, Yoshifumi, Kariya-shi Aichi 448-8671 (JP)
(74) Representative: TBK-Patent

(57) **Abstract**

A purification apparatus 120 includes a plurality of electrochemical devices 10. An anode 20 of each electrochemical device 10 is connected to a cathode of a battery, and a cathode 22 of the electrochemical device 10 is connected to an anode of the battery. An electrolyte layer 24 containing an electrolyte is arranged between the anode 20 and the cathode 22. The electrolyte layer 24 contains a polymer film 26 and a support body 40 having a honeycomb structure and supporting the polymer film 26. The polymer film 26 is an electrolyte that exhibits conductivity with respect to protons H⁺.

## Description

### BACKGROUND OF THE INVENTION

### 1. Field of the Invention

The present invention relates to an exhaust gas purification apparatus.

### 2. Description of the Related Art

Some exhaust gas purification apparatuses, which decompose harmful components present in exhaust gas generated by vehicle internal combustion engines and the like, are provided with electrochemical devices that promote a chemical reaction by utilizing ion conduction by electrolytes. Such electrochemical devices are also referred to as electrochemical reactors.

Electrochemical devices have electrolytes between an anode and a cathode, and the properties of these electrochemical devices are influenced by the conduction properties of these electrolytes. Examples of materials used as electrolytes include solid oxide-based materials (such as yttria-stabilized zirconia (YSZ)) and phosphoric acid-based materials.

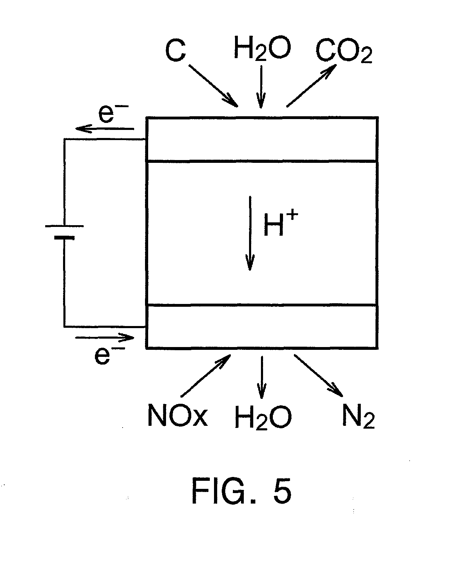

FIG. 5 shows an operating principle of an exhaust gas purification apparatus using a conventional electrochemical device. Carbon and H₂O react at an anode, resulting in the release of electrons and the formation of CO₂ and protons. The protons are conducted toward a cathode through an electrolyte composed of a solid oxide. At a cathode, NOx accepts electrons and reacts with the protons to form N₂ and H₂O. In this manner, carbon and NOx are decomposed and are converted to CO₂ and N₂, respectively, thereby purifying the exhaust gas.

Furthermore, although FIG. 5 shows an electrochemical device that uses a proton conductive electrolyte, the use of an oxygen ion conductive electrolyte is suitable for environments with higher temperatures. The purifying operations of these electrochemical devices are of the same type in that they utilize a chemical reaction in which carbon is oxidized and NOx are reduced.

Japanese Patent Application Laid-open No. 2003-265931 discloses an example of this type of electrochemical device. This device uses an oxygen ion conductive electrolyte as the electrolyte.

However, exhaust gas purification apparatuses using a conventional electrochemical device had the problem of the temperature range at which they are able to operate being excessively high.

For example, in an electrochemical device using a solid oxide as the electrolyte, the operable temperature range is in the vicinity of 600°C, thus making operation difficult in an environment in the vicinity of, for example, 100°C. In particular, exhaust gas from diesel vehicles is at a comparatively low temperature, at times falling below 100°C, and a conventional purification apparatus was unsuitable for applications involving purification of such exhaust gas.

### SUMMARY OF THE INVENTION

In accordance with an aspect of the present invention, an exhaust gas purification apparatus includes an electrochemical device and purifies exhaust gas with that electrochemical device. In this exhaust gas purification apparatus, the electrochemical device includes an anode, a cathode and an electrolyte layer arranged between the anode and the cathode, and the electrolyte layer contains a proton conductive polymer electrolyte.

### BRIEF DESCRIPTION OF THE DRAWINGS

FIG. 1 is a drawing showing the construction of an electrochemical device included in an exhaust gas purification apparatus according to a first embodiment;
FIG. 2 is a cross-sectional view taken along line II-II of the electrochemical device of FIG. 1;
FIG. 3 is a drawing showing a construction in which an exhaust gas purification apparatus, including the electrochemical device of FIG. 1, is arranged;
FIG. 4 is a drawing showing an operation of the electrochemical device of FIG. 1 during purification of exhaust gas; and
FIG. 5 is a drawing showing the operating principle of an electrochemical device included in a conventional exhaust gas purification apparatus.

### DESCRIPTION OF THE PREFERRED EMBODIMENTS

The following provides an explanation of embodiments of the present invention based on the appended drawings.

### First Embodiment

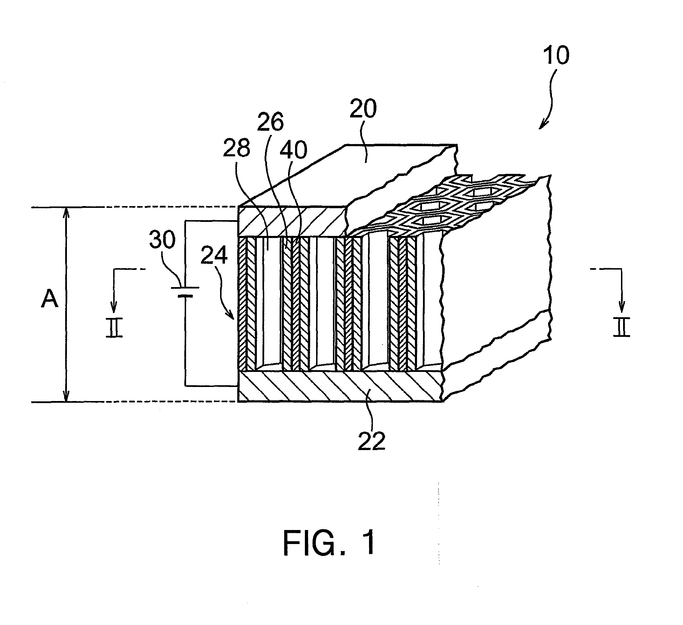

FIGS. 1 to 3 are drawings showing the construction of an exhaust gas purification apparatus 120 and the periphery thereof according to a first embodiment. The purification apparatus 120 includes an electrochemical device 10, and the electrochemical device 10 purifies exhaust gas discharged from an internal combustion engine of a diesel vehicle. Furthermore, this purification is carried out by decomposing nitrogen oxides (NOx) and particulate matter (PM) contained in exhaust gas as will be described later.

As schematically shown in FIG. 1, the electrochemical device 10 is electrically connected to an external battery 30. The electrochemical device 10 is provided with an anode 20 and a cathode 22 as electrodes, the anode 20 is connected to the cathode of the battery 30, and the cathode 22 is connected to the anode of the battery 30.

The electrochemical device 10 is provided with an electrolyte layer 24 containing electrolytes arranged between the anode 20 and the cathode 22. The electrolyte layer 24 allows movement of ions between the anode 20 and the cathode 22. A pathway for this movement of ions serves as a conductive pathway in the electrolyte layer 24.

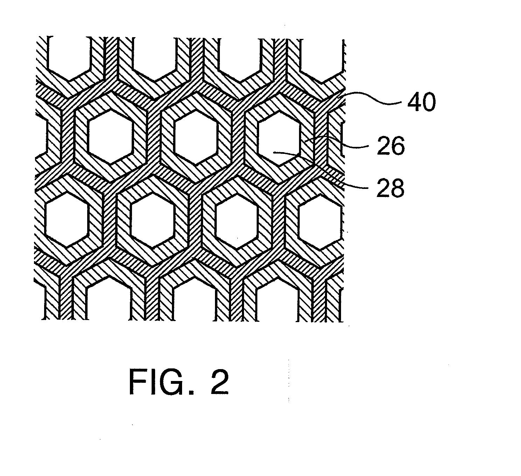

FIG. 2 is a cross-sectional view taken along line II-II of the electrochemical device 10 of FIG. 1. This cross-section is a cross-section of the conductive pathway, namely a cross-section resulting from a plane perpendicular to the direction in which ions are conducted through the electrolyte layer 24.

The electrolyte layer 24 contains a polymer film 26 and a support body 40 having a honeycomb structure and supporting the polymer film 26. The polymer film 26 is an electrolyte exhibiting conductivity with respect to protons H+, and is composed of, for example, Nafion.

The electrolyte layer 24 is produced, for example, in the manner described below.

First, the support body 40 having a honeycomb structure is formed. Although the support body 40 is composed of cordierite, for example, it may also be composed of SiC. Next, Nafion is coated onto the surface of the support body 40, thereby forming the polymer film 26. Furthermore, this coating is carried out to a degree that allows voids 28 to remain within the honeycomb structure.

Although the total thickness of electrochemical device 10, namely dimension A in FIG. 1, is 1 mm, for example, this may be suitably altered in consideration of the balance between the strength of the electrochemical device 10 and the conduction resistance of the polymer film 26.

Next, the anode 20 and the cathode 22 are formed using a known technology such as screen printing, on the opposite surfaces of the electrolyte layer 24, namely both end surfaces of the support body 40. In other words, the construction is such that both end surfaces of the support body 40 are sandwiched by the anode 20 and the cathode 22. Thus the electrochemical device 10 is formed.

The anode 20 is formed by coating with platinum (Pt) followed by firing thereof. Furthermore, the coated material may be another substance, such as rhodium (Rh), provided it has high catalytic activity.

The cathode 22 is formed by adding barium (Ba) to a nickel (Ni)-based material containing yttria-stabilized zirconia (YSZ) and BaCeO₃. Furthermore, another material such as a magnesium (Mg)-based material may be used instead of the Ni-based material. In addition, the Ba added to the cathode 22 may be another substance, provided it has the effect of occluding NOx.

Note that the anode 20 and the cathode 22 are porous electrodes, and have a structure that allows exhaust gas to pass therethrough.

In addition, the anode 20 and the cathode 22 may also be composed of a metal mesh or the like.

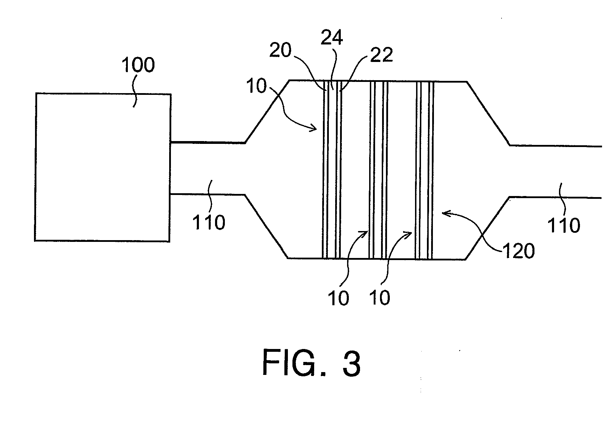

FIG. 3 shows a configuration in which the electrochemical device 10 is arranged in a vehicle exhaust system.

An exhaust pipe 110 is provided to a combustion engine 100 as a pathway for discharging exhaust gas to the outside, and generated exhaust gas is discharged by passing through this exhaust pipe. A purification apparatus 120 for purifying exhaust gas is provided within the exhaust pipe 110, and exhaust gas passes through the inside of the purification apparatus 120. The purification apparatus 120 includes a plurality of electrochemical devices 10. Note that the battery 30 of FIG. 1 is not shown in FIG. 3.

The plurality of electrochemical devices 10 are arranged overlapped at fixed intervals in the same orientation at locations that block the flow path of the exhaust gas. This orientation is, for example, such that the electrode surfaces of the electrochemical devices 10 are vertical to the direction in which the exhaust gas flows. Namely, the anode 20 of a certain electrochemical device 10 and the cathode 22 of an adjacent electrochemical device 10 are arranged so as to be parallel. Consequently, exhaust gas flows through the voids 28 (see FIG. 1) of the electrochemical devices 10.

Next, an explanation is provided of an operation of the electrochemical device 10 and the purification apparatus 120 in the present embodiment.

In FIG. 3, exhaust gas is generated by the operation of the internal combustion engine 100, and this exhaust gas reaches the purification apparatus 120 by passing through the exhaust pipe 110. The exhaust gas first contacts the anode 20 of the electrochemical device 10 arranged closest to the internal combustion engine 100. Since the anode 20 is a porous electrode, exhaust gas passes through the inside thereof and enters the void 28 (see FIG. 1) of the electrolyte layer 24. The exhaust gas then reaches the anode 22 by passing through the void 28 where it contacts the cathode 22. Since the cathode 22 is also a porous electrode, the exhaust gas escapes to the outside of the electrochemical device 10 by passing through the inside of the cathode 22.

In this manner, the electrochemical device 10 constitutes a pathway for the passage of exhaust gas, which sequentially passes through the anode 20, the void 28 and the cathode 22, and the exhaust gas passes through this pathway. Subsequently, the exhaust gas reaches the electrochemical device 10 arranged adjacent thereto, where it passes through that electrochemical device 10 in the same manner.

Incidentally, the electrochemical devices 10 may be arranged in the opposite direction to that described above. That is, the pathway for the passage of exhaust gas may sequentially pass through the cathode 22, the void 28 and the anode 20.

Purification of exhaust gas by the electrochemical device 10, namely decomposition of PM and NOx, is carried out here.

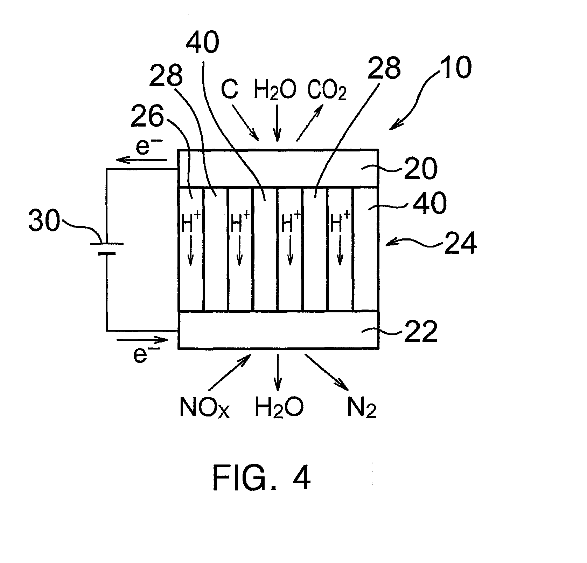

FIG. 4 shows an operation of the electrochemical device 10 during purification of exhaust gas. Transfer of charge is mainly carried out by protons via the polymer film 26.

Carbon contained in PM in the exhaust gas and H₂O in the exhaust gas react on the surface of the anode 20 and around the periphery thereof, resulting in the formation of CO₂, protons and electrons. Electrons are attracted to the cathode of the battery 30 and migrate to the battery 30, while protons are attracted to the cathode 22 and migrate within the polymer film 26. CO₂ is discharged to the outside air through the exhaust pipe 110. In this manner, exhaust gas is purified as a result of PM being decomposed around the periphery of the anode 20.

NOx present in exhaust gas and protons conducted by the polymer film 26 react on the surface of the cathode 22 and around the periphery thereof by accepting electrons supplied from the battery 30, resulting in the formation of N₂ and H₂O. The formed N₂ and H₂O are discharged to the outside air through the exhaust pipe 110. In this manner, exhaust gas is purified as a result of NOx being decomposed around the periphery of the cathode 22.

Here, since the polymer film 26 contains Nafion as an electrolyte, it operates when the temperature is 80°C or higher.

In this manner, since the exhaust gas purification apparatus 120 according to the present embodiment is provided with the electrochemical devices 10 having a conductive pathway composed of the polymer film 26, it is able to operate at comparatively low temperatures. More specifically, it is able to operate in environments of 80°C or higher.

In particular, the lower limit of the exhaust temperature of diesel engines is low and may be in the vicinity of 100°C or lower, but the purification apparatus 120 is able to operate even at such a temperature range. Accordingly, the purification apparatus 120 is able to more effectively purify exhaust gas from diesel engines.

In addition, the electrical conductivity of the Nafion contained in the polymer film 26 is on the order of 10⁻¹ to 10⁻². This is equivalent to that of conventional electrolytes such as solid oxides, for example.

The polymer film 26 is composed of Nafion in the above-mentioned first embodiment. As a variation thereof, the polymer film 26 may also have another composition. As an example thereof, since a polymer having hydrophilic sites (such as that composed of sulfonic acid groups) enables the movement of protons through a hydrophilic chain, it can be used as a proton conductive electrolyte.

Incidentally, polymer films generally act as electrolytes in the vicinity of 100°C, and they are therefore able to effectively purify exhaust gas from diesel vehicles.

Since the performance of polymer films as electrolytes generally decreases rapidly unless hydrated, it is necessary to provide a separate humidifier in fuel cells and the like. In the present embodiment, however, since the support body 40 has a honeycomb structure and exhaust gas passes through the voids 28 thereof, the polymer film 26 coated onto the surface of the support body 40 comes into contact with the exhaust gas. Consequently, the polymer film 26 is spontaneously hydrated by H₂O contained in the exhaust gas. Accordingly, it is not necessary to add a hydration member for maintaining the performance of the polymer film 26. In other words, the configuration of the electrochemical device 10 can be simplified compared with when it is used in other applications (such as fuel cells).

In the first embodiment described above, the purification apparatus 120 is used to purify exhaust gas from vehicles. As a variation thereof, the exhaust gas purification apparatus 120 may also be used to purify exhaust gas from a source other than a vehicle. For example, the purification apparatus 120 may be used in agricultural machinery or power generation plants. The purification apparatus 120 may also be used for another exhaust gas provided it contains carbon and NOx.

Although the support body 40 is composed of a honeycomb structure having hexagonal voids in the first embodiment, the shape of the voids is not limited to being hexagonal, and the voids may also be in the shape of grids, for example.

Therefore, the present examples and embodiments are to be considered as illustrative and not restrictive and the invention is not to be limited to the details given herein but may be modified within the scope of the appended claims.

This application claims a foreign priority benefit based on Japanese Patent Application No. 2007-300626, filed on November 20, 2007, which is hereby incorporated by reference herein in its entirety as if fully set forth herein.

A purification apparatus 120 includes a plurality of electrochemical devices 10. An anode 20 of each electrochemical device 10 is connected to a cathode of a battery, and a cathode 22 of the electrochemical device 10 is connected to an anode of the battery. An electrolyte layer 24 containing an electrolyte is arranged between the anode 20 and the cathode 22. The electrolyte layer 24 contains a polymer film 26 and a support body 40 having a honeycomb structure and supporting the polymer film 26. The polymer film 26 is an electrolyte that exhibits conductivity with respect to protons H⁺.

## Claims

1. An exhaust gas purification apparatus (120) that comprises an electrochemical device (10) and purifies exhaust gas with the electrochemical device (10), **characterized in that:**
the electrochemical device (10) includes an anode (20), a cathode (22) and an electrolyte layer (24) arranged between the anode and the cathode; and
the electrolyte layer (24) comprises a proton conductive polymer electrolyte (26).

2. The exhaust gas purification apparatus (120) according to Claim 1, **characterized in that:**
the anode (20) and the cathode (22) are porous electrodes;
the electrolyte layer (24) includes a support body (40) having a honeycomb structure;
both end surfaces of the support body (40) are sandwiched between the anode (20) and the cathode (22);
the proton conductive polymer electrolyte (26) is coated on the support body (40); and
the electrochemical device (10) constitutes a pathway for the passage of exhaust gas, wherein the exhaust gas sequentially passes through one of the electrodes (20,22), voids (28) in the honeycomb structure of the support body (40) and the other of the electrodes (20,22).

3. The exhaust gas purification apparatus (120) according to Claim 1, **characterized in that** the proton conductive polymer electrolyte (26) acts as an electrolyte at 100°C.
